# FASCICULE DE BREVET EUROPEEN

(11) **EP 2 396 606 B1**
(45) Date de publication et mention de la délivrance du brevet: **08.04.2015**
(21) Numéro de dépôt: 10707328.0
(22) Date de dépôt: 21.01.2010
(51) Int. Cl.: F24J 2/32, F24J 2/05

(54) **ENSEMBLE DE CALODUCS POUR CAPTEURS SOLAIRES**
WÄRMEROHRENEINHEIT FÜR SONNENKOLLEKTOREN
HEAT PIPE ASSEMBLY FOR SOLAR COLLECTORS

(30) Priorité: 12.02.2009 FR 0950885
(43) Date de publication de la demande: 21.12.2011
(73) Titulaire: Sophia Antipolis Energie Developpement, 06560 Valbonne (FR); Commissariat à l'Energie Atomique, 75015 Paris (FR)
(72) Inventeur: GRUSS, Jean-Antoine, F-38170 Seyssinet (FR); LENÔTRE, Christian, F-06220 Bar-sur-loup (FR); MARECHAL, Alain, F-38210 Tullins (FR); ROSSI, Didier, F-83100 Toulon (FR); WOHRER, Michel, F-92200 Neuilly Sur Seine (FR)
(74) Mandataire: Jacobson, Claude
(86) Numéro de dépôt international: PCT/FR2010/050088
(87) Numéro de publication internationale: WO 2010/092269

(56) Documents cités:
- DE-U1-202006 016 100
- JP-A- 56 034 057
- JP-A- 58 210 439
- JP-A- 59 183 254
- JP-A- 60 105 861
- JP-A- 2003 042 572

## Description

La présente invention est relative à un ensemble de caloducs pour capteurs solaires, du type comprenant une pluralité de caloducs, chaque caloduc étant propre à être agencé dans un capteur solaire respectif, et comprenant un fluide de caloduc, une première feuille et une deuxième feuille localement fusionnées entre elles et délimitant un réservoir, le réservoir contenant le fluide de caloduc, s'étendant sur une partie chaude d'évaporation du fluide de caloduc et une partie froide de condensation du fluide de caloduc, et étant formé par un interstice entre les deux feuilles un tel ensemble est connu du document JP 2003042572.

L'invention concerne également un ensemble de capteurs solaires du type comprenant une pluralité de capteurs solaires, chaque capteur comprenant :
- un tube extérieur de section circulaire, ayant deux extrémités et étant fermé en une première de ses extrémités,
- une couche d'absorption du rayonnement solaire disposée à l'intérieur du tube extérieur,
- un caloduc respectif d'un ensemble de caloducs,
chaque tube extérieur étant fermé de manière hermétique autour du caloduc respectif en la seconde de ses extrémités, le vide étant formé à l'intérieur dudit tube extérieur.

L'invention concerne également un système de production d'eau chaude comprenant un tel ensemble de capteurs solaires, et une installation de génération d'énergie électrique à partir d'énergie solaire comprenant un tel système de production d'eau chaude.

L'invention concerne également un procédé de fabrication d'un ensemble de caloducs pour capteurs solaires.

On connaît un ensemble de caloducs pour capteurs solaires du type précité. Lors de la fabrication de tels caloducs, deux feuilles sont fusionnées entre elles en délimitant les réservoirs des caloducs. Les deux feuilles sont alors découpées selon le contour extérieur respectif de chacun des caloducs. Chaque réservoir respectif est ensuite rempli avec un fluide de caloduc.

La partie chaude des caloducs est alors agencée dans un capteur solaire respectif, et la partie froide de chaque caloduc respectif est connectée à un conduit de transport d'un fluide caloporteur destiné à être chauffé.

Toutefois, les caloducs présentent un coût de fabrication élevé. En outre, l'ensemble de caloducs présente un risque de gauchissement avec le conduit de transport du fluide caloporteur, lorsque les parties froides des caloducs sont connectées à ce conduit, et que celui-ci s'allonge sous l'effet de la température.

Un but de l'invention est de réduire le coût de fabrication de l'ensemble de caloducs.

A cet effet, l'invention a pour objet un ensemble de caloducs du type précité, caractérisé en ce que les réservoirs d'au moins deux caloducs sont délimités par une même première feuille et une même deuxième feuille, et en ce que les parties froides desdits au moins deux caloducs sont partiellement fusionnées entre elles deux à deux, et les parties chaudes desdits au moins deux caloducs sont disjointes.

Suivant d'autres modes de réalisation, l'ensemble de caloducs comprend une ou plusieurs des caractéristiques suivantes, prises isolément ou suivant toutes les combinaisons techniquement possibles :
- les réservoirs des caloducs sont reliés hydrauliquement entre eux de manière à former un unique réservoir s'étendant sur la pluralité de caloducs ;
- les feuilles sont métalliques, de préférence en aluminium.

L'invention a également pour objet un ensemble de capteurs solaires du type précité, caractérisé en ce que l'ensemble de caloducs est tel que défini ci-dessus.

Suivant d'autres modes de réalisation, l'ensemble de capteurs solaires comprend une ou plusieurs des caractéristiques suivantes, prises isolément ou suivant toutes les combinaisons techniquement possibles :
- chaque capteur solaire comprend en outre un tube intérieur de section circulaire, disposé à l'intérieur du tube extérieur, chaque tube ayant deux extrémités et étant fermé en une première de ses extrémités, et les tubes étant scellés l'un à l'autre, en la seconde de leurs extrémités, les tubes étant séparés par du vide ;
- le tube intérieur de chaque capteur comporte une surface extérieure orientée vers le tube extérieur dudit capteur, et une surface intérieure, la couche d'absorption dudit capteur est disposée contre ladite surface extérieure, et pour la partie chaude du caloduc dudit capteur, le réservoir est appliqué au moins localement contre ladite surface intérieure ;

- la partie chaude de chaque caloduc est en forme d'un demi-cylindre ;
- la partie froide de chaque caloduc est propre à être disposée au contact d'un conduit cylindrique, et ladite partie froide est en forme d'un demi-cylindre ;
- l'axe du demi-cylindre de la partie chaude de chaque caloduc est distinct de l'axe du demi-cylindre de la partie froide du caloduc correspondant, et le caloduc comporte un rétrécissement de son étendue circonférentielle et/ou longitudinale par rapport à son étendue dans la partie courante des parties chaude et froide, entre la partie chaude et la partie froide formant une charnière de liaison ;
- les capteurs sont sensiblement parallèles les uns des autres, et l'ensemble comporte au moins une barre de liaison des capteurs solaires entre eux, ladite barre étant disposée sensiblement perpendiculairement aux capteurs et au contact de chaque tube extérieur du côté de sa première extrémité.

L'invention a également pour objet un système de production d'eau chaude à partir d'énergie solaire comprenant :
- un ensemble de capteurs solaires propres à chauffer un fluide caloporteur à partir d'énergie solaire, et
- un circuit de transport du fluide caloporteur entre les capteurs solaires et un distributeur d'eau chaude,
caractérisé en ce que l'ensemble de capteurs solaires est tel que défini ci-dessus.

L'invention a également pour objet une installation de génération d'énergie électrique à partir des énergies solaires comprenant :
- un système de production d'eau chaude,
- une source froide, et
- une machine thermodynamique de production d'électricité, utilisant l'eau chaude produite par ledit système et la source froide,
caractérisée en ce que le système de production d'eau chaude est tel que défini ci-dessus.

L'invention a également pour objet un procédé de fabrication d'un ensemble de caloducs pour capteurs solaires comprenant une pluralité de caloducs, le procédé comportant :
- l'assemblage d'une première feuille et d'une deuxième feuille délimitant entre elles les réservoirs d'au moins deux caloducs, en maintenant une portion de liaison entre deux caloducs adjacents parmi lesdits au moins deux caloducs, et
- le remplissage des réservoirs avec un fluide de caloduc.

Suivant un autre mode de réalisation, le procédé comprend la caractéristique suivante :
- l'étape d'assemblage comporte :
   ▪ le dépôt d'une encre spécifique par sérigraphie de la première feuille selon un motif désiré pour un réservoir de chaque caloduc,
   ▪ le chauffage de la première feuille et de la seconde feuille,
   ▪ le laminage à chaud des deux feuilles pour réaliser une soudure par diffusion des deux feuilles en dehors de chaque motif,
   ▪ l'injection d'air comprimé au niveau des zones occupées par les motifs d'encre, pour former chaque réservoir, et
   ▪ la fermeture hermétique, par pressage à chaud, des extrémités de chaque réservoir à l'exception d'une extrémité de remplissage.

Ces caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'une installation de génération d'énergie électrique selon l'invention ;
- la figure 2 est une vue schématique de dessus d'un ensemble de quatre capteurs solaires selon l'invention,
- la figure 3 est une vue en coupe selon le plan III de la figure 2,
- la figure 4 est une vue schématique de dessus d'un ensemble de caloducs de la figure 2, selon un premier mode de réalisation de l'invention,
- la figure 5 est une vue schématique d'une étape de fabrication de l'ensemble de caloducs de la figure 4,
- la figure 6 est une vue analogue à celle de la figure 4 selon un deuxième mode de réalisation de l'invention.

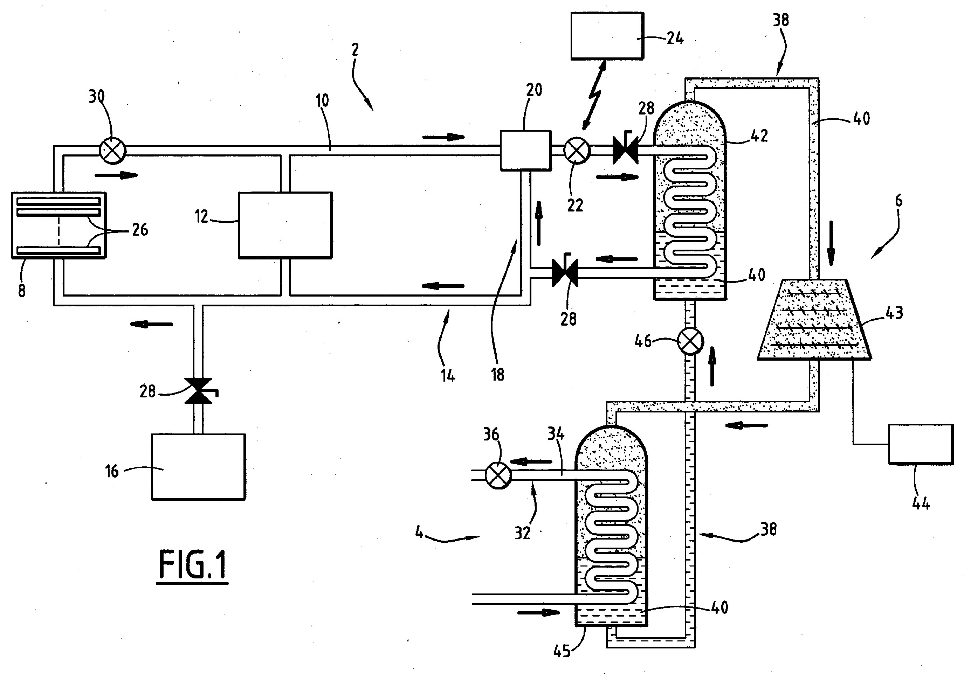

Sur la figure 1, une installation de génération d'énergie électrique à partir d'énergie solaire comporte un système 2 de production d'eau chaude , une source froide 4 et une machine thermodynamique 6 de production de l'électricité.

Le système de production d'eau chaude 2 comprend des moyens de chauffage 8 par énergie solaire d'un premier fluide caloporteur 10, tel que de l'eau, des moyens 12 de stockage de l'énergie thermique et un premier circuit fermé 14 de transport du premier fluide caloporteur 10. Le premier circuit 14 relie les moyens de chauffage 8, les moyens de stockage 12 et la machine thermodynamique 6 de production d'électricité.

Le système de production d'eau chaude 2 comprend une bâche de stockage 16 pour délester le premier circuit 14, et une boucle de régulation 18 comportant un mélangeur 20 et une première pompe 22. L'installation comporte des moyens 24 de commande à distance de la boucle 18.

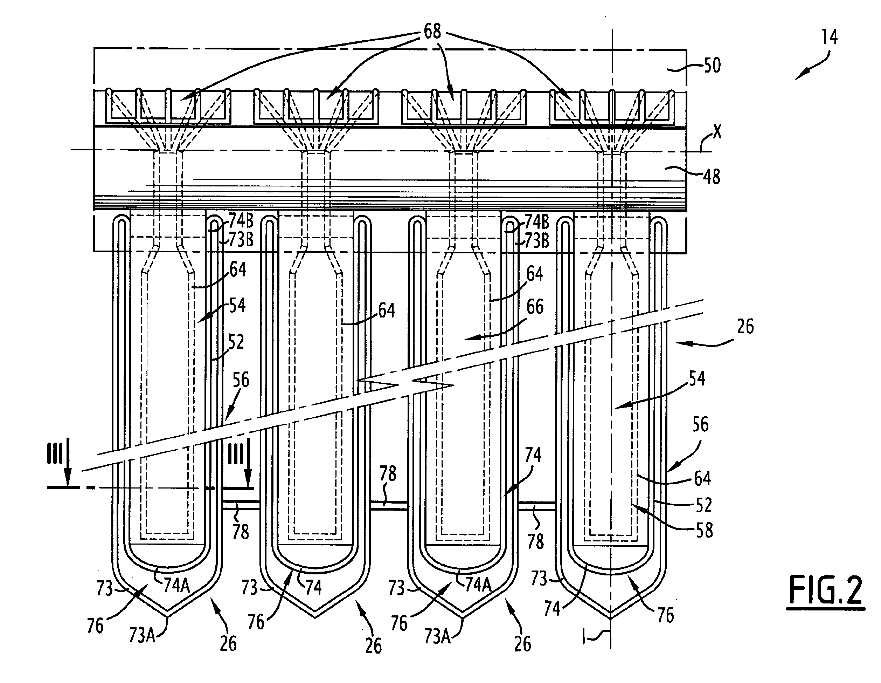

Les moyens de chauffage 8 comportent une pluralité de capteurs solaires 26 décrits plus en détail par la suite en référence aux figures 2 à 7.

Le premier circuit 14 comporte une pluralité de vannes 28, le mélangeur 20, la première pompe 22 et une deuxième pompe 30. Le premier circuit 14 comporte un échangeur 31, en forme de serpentin, destiné à transmettre la chaleur transportée par le fluide caloporteur 10 à la machine thermodynamique 6.

En variante, le système de production d'eau chaude 2 comprend un distributeur d'eau chaude, et n'est pas relié à une machine thermodynamique de production d'électricité. Le circuit 14 de transport du fluide caloporteur 10 relie les capteurs solaires 26 au distributeur d'eau chaude. Le distributeur comprend l'échangeur 31 destiné à transmettre la chaleur transportée par le fluide caloporteur 10.

La source froide 4 comprend un deuxième circuit 32 de transport d'un deuxième fluide caloporteur 34, tel que de l'eau. La circulation est assurée par une pompe 36.

La machine thermodynamique 6 comprend un troisième circuit 38 de transport d'un fluide de service 40, une chaudière 42, une turbine 43 couplée à une génératrice d'électricité 44 et un condenseur 45. La circulation du fluide de service 40 dans le troisième circuit 38 est assurée par une pompe 46.

La figure 2 illustre un ensemble de quatre capteurs solaires 26 connectés au premier circuit 14. Le premier circuit 14 comprend un conduit 48 de transport du premier fluide caloporteur 10, et une gaine thermiquement isolante 50 disposée sur la périphérie du conduit 48. Le conduit 48 est de forme cylindrique d'axe X orienté selon un plan horizontal, non représenté.

Chaque capteur solaire 26 comprend une couche 52 d'absorption d'un rayonnement solaire, un caloduc 54, et des moyens d'isolation thermique 56. La couche d'absorption 52 est, par exemple, réalisée en nitrite d'aluminium pulvérisé. Chaque capteur solaire 26 s'étend selon un axe I incliné par rapport au plan horizontal. L'axe I forme avec le plan horizontal un angle d'inclinaison supérieur à 5 °, de préférence supérieur à 30 °.

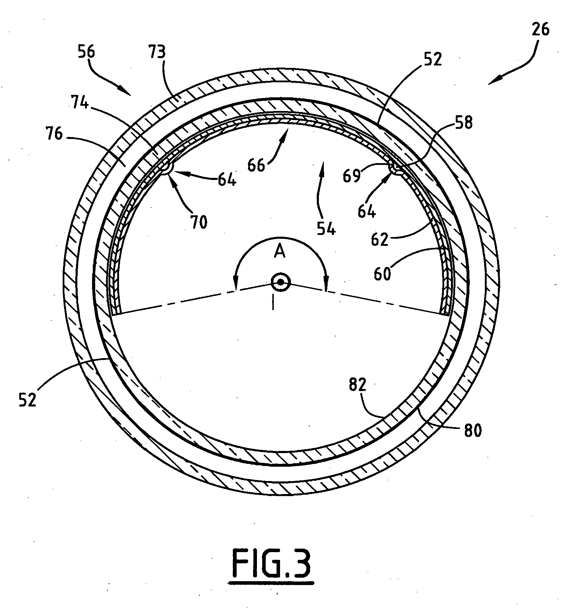

Sur la figure 3, chaque caloduc 54 comprend un fluide de caloduc 58, ainsi qu'une première feuille 60 et une deuxième feuille 62 localement fusionnées entre elles. Les deux feuilles 60, 62 délimitent un réservoir 64 contenant le fluide de caloduc 58. Le fluide de caloduc 58 est, par exemple, du méthanol, de l'éthanol, un frigorigène HFC, ou encore un frigorigène HCFC.

Le réservoir 64 s'étend sur une partie chaude 66 d'évaporation du fluide de caloduc et une partie froide 68 de condensation du fluide de caloduc, comme représenté sur la figure 2. Le réservoir 64 est formé par un interstice 69 entre les deux feuilles 60, 62. Les feuilles 60, 62 sont, par exemple, réalisés en un métal, tel que de l'aluminium.

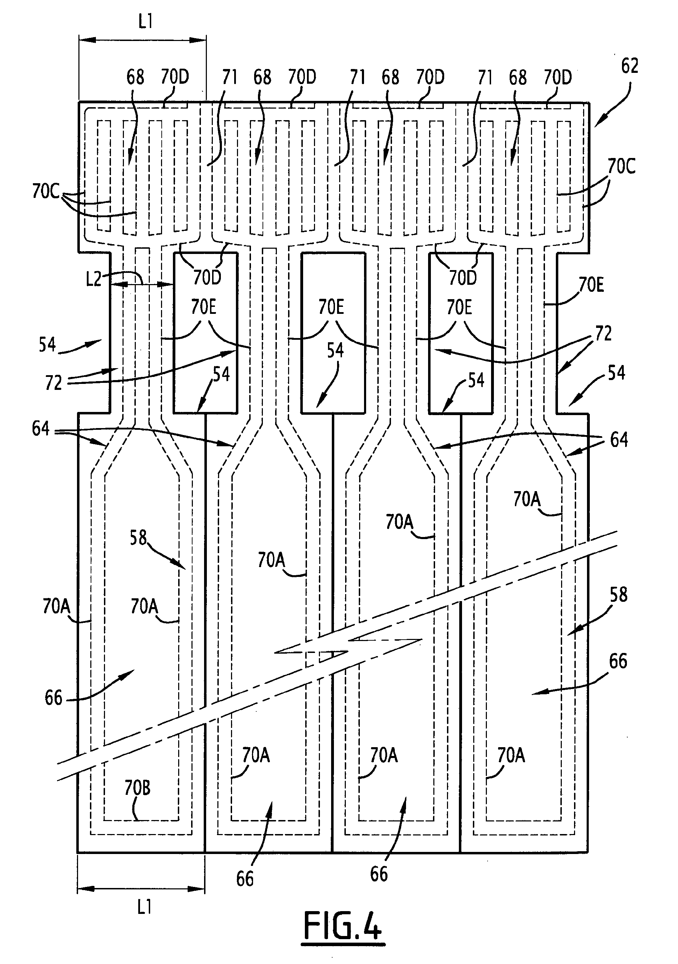

La figure 4 illustre un ensemble de caloducs comprenant quatre caloducs 54. En variante, l'ensemble de caloducs comprend, par exemple, huit ou douze caloducs 54.

L'ensemble des caloducs présente une forme plane à l'issue de sa fabrication, comme représenté sur la figure 4. L'ensemble des caloducs est agencé selon une forme désirée lorsqu'il est disposé dans un ensemble de capteurs solaires, comme représenté sur la figure 2.

Les réservoirs 64 des quatre caloducs 54 sont délimités par la même première feuille 60 et la même deuxième feuille 62.

Chaque réservoir 64 comporte une ramification de canaux 70 de circulation du fluide de caloduc 58. Chaque réservoir 64 comporte un ou plusieurs canaux 70 de circulation dans la partie chaude 66 du caloduc (deux dans l'exemple illustré), et plusieurs canaux 70 de circulation dans la partie froide 68 du caloduc (cinq dans l'exemple illustré). Les canaux de circulation 70 sont reliés et forment avec leurs prolongements dans la partie froide un circuit fermé pour le fluide de caloduc 58. Chacun des canaux 70 est orienté sensiblement selon l'axe I du capteur solaire correspondant. Le terme 'sensiblement' s'entend par un écart angulaire allant jusqu'à ±5°.

Les canaux 70 présentent des premiers tronçons rectilignes 70A parallèles s'étendant dans la partie chaude 66. Ils sont reliés à leur extrémité libre par un premier conduit de liaison 70B. Les canaux 70 présentent des deuxièmes tronçons rectilignes 70C parallèles s'étendant dans la partie froide 68. Ils sont reliés à leurs extrémités par des deuxièmes conduits de liaison 70D. Les tronçons 70A et 70C sont reliés par un faisceau de tronçons convergents 70E puis divergents disposés dans des régions de changement de courbure des caloducs 54.

Les parties chaudes 66 des quatre caloducs 54 sont disjointes les unes des autres.

Les parties froides 68 des quatre caloducs 54 sont fusionnées par trois portions de liaison 71, chaque portion de liaison 71 étant agencée entre deux parties froides 68 adjacentes. Chaque portion de liaison 71 s'étend selon une direction d'extension des caloducs 54 respectifs.

Chaque caloduc 54 comporte un rétrécissement 72 de son étendue circonférentielle entre la partie chaude 66 et la partie froide 68, par rapport à son étendue dans la partie courante des parties chaude 66 et froide 68. Le rétrécissement 72 forme une charnière de liaison entre la partie chaude 66 et la partie froide 68.

La partie chaude 66 et la partie froide 68 présentent, par exemple, une même première largeur L1 perpendiculairement à la direction d'extension des caloducs 54. La première largeur L1 est, par exemple, égale à 80 mm. Le rétrécissement 72 présente, perpendiculairement à la direction d'extension, une deuxième largeur L2 de valeur inférieure à celle de la première largeur L1. La deuxième largeur L2 est, par exemple, égale à 32 mm.

Les moyens d'isolation 56, visibles sur la figure 3, entourent de manière sensiblement hermétique la couche d'absorption 52 et sont propres à permettre le passage du rayonnement solaire. Les moyens d'isolation 56 sont propres à isoler thermiquement la couche d'absorption 52 et la partie chaude 66 du caloduc vis-à-vis des conditions climatiques extérieures au capteur solaire 26.

Les moyens d'isolation 56 comprennent un tube extérieur 73 et un tube intérieur 74 disposé à l'intérieur du tube extérieur 73. Les tubes 73, 74, sensiblement cylindriques, présentent une section circulaire, et sont concentriques d'axe I. Le tube extérieur 73 a une première extrémité 73A et une seconde extrémité 73B. Le tube intérieur 74 a une première extrémité 74A et une seconde extrémité 74B.

Comme représenté sur la figure 2, chaque tube 73, 74 est fermé en forme d'une demi-sphère en sa première extrémité 73A, 74A, et les tubes 73, 74 sont scellés l'un à l'autre, en leurs secondes extrémités 73B, 74B. Les deux tubes 73, 74 sont séparés par du vide 76. Les tubes 73, 74 sont, par exemple, réalisés en verre.

Les premières extrémités 73A, 74A sont orientées à l'opposé du conduit de transport 48.Les secondes extrémités 73B, 74B sont orientées vers le conduit de transport 48. La seconde extrémité 74B du tube intérieur est ouverte. Les moyens d'isolation 56 comportent un bouchon d'isolation, non représenté, inséré dans l'extrémité ouverte 74B du tube intérieur.

Les quatre capteurs 26 sont sensiblement parallèles, et l'ensemble de capteurs comporte une barre 78 de liaison des capteurs solaires 26 entre eux. La barre de liaison 78 est disposée sensiblement perpendiculairement aux capteurs 26 et au contact de chaque tube extérieur 74 du côté de sa première extrémité 74A. Plus précisément, la barre de liaison 78 est en contact avec chacun des capteurs 26 dans une zone comprise entre sa première extrémité 74A et le milieu de sa longueur. Le terme 'sensiblement' s'entend par un écart angulaire allant jusqu'à ±5°.

Le tube intérieur 74 comporte une surface extérieure 80 orientée vers le tube extérieur 73, et une surface intérieure 82, visibles sur la figure 3. La couche d'absorption 52 est disposée contre la surface extérieure 78 du tube intérieur.

La partie chaude 66 de chaque caloduc est en forme d'un demi-cylindre d'axe I, comme représenté sur la figure 3. La section transversale de la partie chaude 66 est en forme d'un arc de cercle d'angle A compris entre 180° et 220°.

La partie chaude 66 de chaque caloduc, et notamment la partie du réservoir 64 contenue dans cette partie chaude, est appliquée contre la surface intérieure 82 du tube intérieur.

En variante, les moyens d'isolation 56 comprennent le seul tube extérieur 73 fermé en l'une de ses extrémités, la couche d'absorption 52 étant disposée à l'intérieur du tube extérieur 73. La couche d'absorption 52 est, par exemple, disposée sur la surface de la partie chaude 66 du caloduc. Le tube extérieur 73 est fermé de manière hermétique autour du caloduc 54 en l'autre de ses extrémités, le vide 76 étant formé à l'intérieur du tube extérieur 73.

La partie froide 68 de chaque caloduc est en forme d'un demi-cylindre d'axe X agencé entre le conduit 48 et la gaine isolante 50 en étant enroulé autour du conduit 48, comme représenté sur la figure 2.

L'axe I du demi-cylindre de la partie chaude 66 est distinct de l'axe X du demi-cylindre de la partie froide 68.

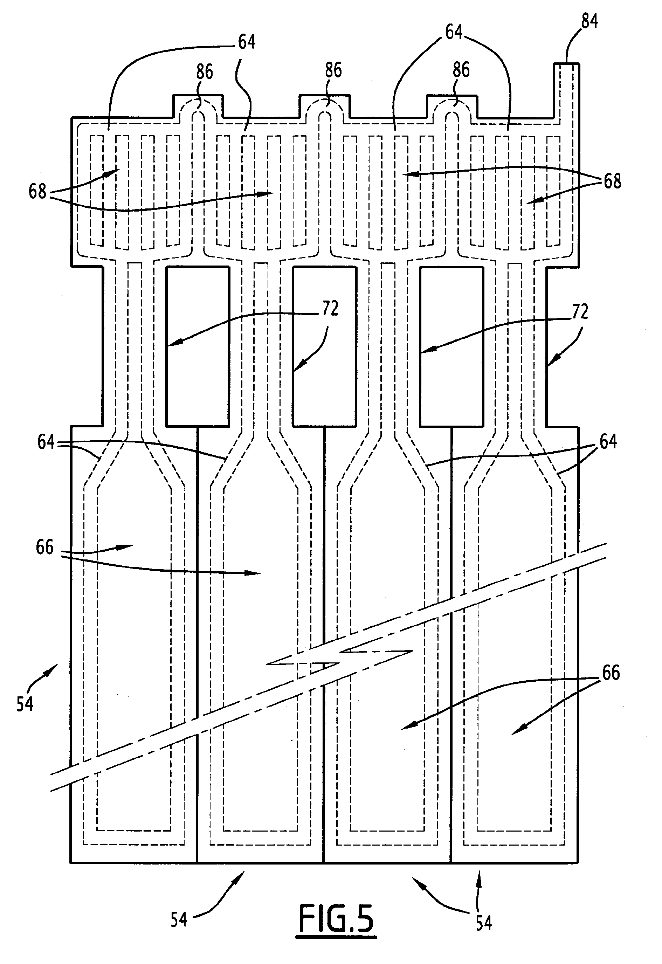

Un procédé de fabrication de l'ensemble de caloducs, visible sur les figures 4 et 5, comporte une étape d'assemblage par laminage à chaud de la première feuille 60 et de la deuxième feuille 62 délimitant entre elles les réservoirs 64 des quatre caloducs 54, en maintenant la portion de liaison 71 entre deux caloducs 54 adjacents. Dans l'exemple de réalisation des figures 4 et 5, chaque portion de liaison 71 est agencée entre deux parties froides 68 respectives.

L'étape d'assemblage comporte le dépôt d'une encre spécifique par sérigraphie de la première feuille 60 selon un motif désiré pour le réservoir 64 de chaque caloduc 54, le chauffage de la première feuille 60 et de la seconde feuille 62, et le laminage à chaud des deux feuilles 60, 62 pour réaliser une soudure par diffusion des deux feuilles 60, 62 en dehors de chaque motif. Le chauffage réalisé est, par exemple, un chauffage radiatif.

L'étape d'assemblage comporte alors une étape de découpe selon le contour extérieur désiré de l'ensemble de caloducs. La découpe est notamment effectuée selon le contour de chacune des parties chaudes 66, de sorte que les parties chaudes 66 des quatre caloducs 54 sont disjointes, et selon le contour de chacun des rétrécissements 72. La découpe est réalisée selon le contour extérieur global des quatre parties froides 68 réunies. La découpe est réalisée grâce à un procédé tel qu'un cisaillage, un grignotage, une découpe laser, une découpe chimique, une découpe par jet d'eau.

L'étape d'assemblage comporte ensuite l'injection d'air comprimé au niveau des motifs occupés par l'encre pour former chaque réservoir 64, et la fermeture hermétique par pressage à chaud des extrémités de chaque réservoir à l'exception d'une extrémité de remplissage 84, visible sur la figure 5..

Le procédé comporte ensuite une étape de mise sous vide des réservoirs 64, puis de remplissage des réservoirs 64 avec le fluide de caloduc 58. Le remplissage de tous les réservoirs 64 à partir de la seule extrémité de remplissage 84 est assuré de par la présence de trois conduits temporaires de remplissage 86, chaque conduit de remplissage 86 étant agencé entre deux réservoirs 64 successifs au niveau des parties froides 68.

Après le remplissage des réservoirs 64, l'extrémité de remplissage 84 et les conduits temporaires de remplissage 86 sont éliminés par découpe, et les caloducs 54 sont soudés hermétiquement aux endroits découpés, de sorte que les réservoirs 64 sont fermés individuellement.

En variante, après le remplissage des réservoirs 64, l'extrémité de remplissage 84 et les conduits temporaires de remplissage 86 sont obturés par clinchage, c'est-à-dire par emboutissage de ladite extrémité et desdits conduits temporaires entre un poinçon et une matrice, de sorte que les réservoirs 64 sont fermés individuellement. Selon cette variante, chaque conduit temporaire de remplissage est en forme d'un arc de cercle, comme représenté sur la figure 5, ou encore en forme d'un tronçon rectiligne entre deux conduits de liaison 70 successifs. La matrice ou le poinçon utilisé pour l'étape de clinchage sont par exemple en forme de queue d'aronde. L'étape de clinchage permet d'améliorer encore la résistance à la pression de la fermeture des réservoirs 64, et les réservoirs 64 sont donc plus hermétiques à une fuite du fluide de caloduc 58.

En variante encore, après le remplissage des réservoirs 64, l'extrémité de remplissage 84 et les conduits temporaires de remplissage 86 sont obturés au cours d'une étape d'écrasement par emboutissage, de sorte que les réservoirs 64 sont fermés individuellement.

En complément, l'étape de découpe, ou l'étape de clinchage, ou encore l'étape d'écrasement sont réalisées après une étape de répartition de la masse du fluide de caloduc 58 entre les différents réservoirs 64.

A l'issue du procédé de fabrication, l'ensemble de caloducs est tel que représenté sur la figure 4.

Chaque partie chaude 66 de caloduc est alors agencée en forme de demi-cylindre, afin d'être insérée dans le tube cylindrique correspondant du capteur solaire 26.

Le fonctionnement de l'installation de génération d'énergie électrique, et en particulier des capteurs solaires, va maintenant être décrit.

L'installation de génération d'énergie électrique est dite à basse température, compte tenu de la température maximale du système de production d'eau chaude égale à 150°C qui est nettement inférieure à celle utilisée dans d'autres centrales solaires thermiques, telles que les centrales à capteurs cylindro-paraboliques, les centrales à tours, les centrales à capteurs paraboliques, où la température du fluide caloporteur circulant dans la source chaude est supérieure à 400 °C.

Les capteurs solaires 26 des moyens de chauffage 6 captent, durant la journée, le rayonnement solaire, puis transmettent au premier fluide caloporteur 10 l'énergie thermique associée au rayonnement solaire.

Plus précisément, le rayonnement solaire est absorbé par la couche d'absorption 52 de chaque capteur solaire, les moyens d'isolation 56 permettant le passage du rayonnement solaire. L'énergie thermique associée à l'absorption du rayonnement solaire est alors transmise aux caloducs 54. La dissipation de l'énergie thermique en dehors du capteur solaire 26 est limitée de par les moyens d'isolation thermique 56, le vide 76 assurant l'isolation thermique et le tube extérieur l'effet de serre.

L'énergie thermique transmise à la partie chaude 66 de chaque caloduc entraîne progressivement un changement de phase du fluide de caloduc 58, de son étant liquide à son état gazeux. Le fluide de caloduc à l'état gazeux s'élève alors en direction de la partie froide 68 respective de chaque caloduc, à travers les différents canaux 70 du réservoir. Le réservoir 64 étant appliqué au moins localement contre le tube intérieur 74, lui-même en contact avec la couche d'absorption 52, dans la partie chaude 66 du caloduc, la conduction thermique est améliorée entre la couche d'absorption 52 et le fluide du caloduc 58, de sorte que les pertes de chaleur par rayonnement de corps noir échappant à l'effet de serre, sont réduites.

La chaleur transportée par le fluide de caloduc 58 de la partie chaude 66 vers la partie froide 68 est alors transmise au premier fluide caloporteur 10 par conduction thermique entre les canaux 70 disposés dans la partie froide et le conduit 48 du premier circuit. Cette conduction thermique entraîne alors une élévation de la température du premier fluide caloporteur 10 et un abaissement de la température du fluide de caloduc 58.

Suite à l'abaissement de la température du fluide de caloduc 58, le fluide de caloduc 58 change à nouveau progressivement de phase, de son état gazeux à son état liquide. Le fluide de caloduc à l'état liquide redescend alors par gravitation de la partie froide 68 vers la partie chaude 66, de par l'angle d'inclinaison, afin de transporter à nouveau de l'énergie thermique issue du rayonnement solaire.

Les moyens de stockage 12 servent alors de tampons entre l'énergie thermique produite par les capteurs solaires 26 des moyens de chauffage et celle consommée par la machine thermodynamique 6 de production d'électricité. Les moyens de chauffage 12 permettent donc de découpler la production d'électricité de la disponibilité solaire.

Plusieurs modes de fonctionnement sont envisageables au niveau du système de production d'eau chaude 2, à l'aide des vannes 28, du mélangeur 20 et des pompes 22, 30 : le stockage seul d'énergie thermique, la production directe d'énergie thermique, le stockage et la production d'énergie thermique, le déstockage d'énergie thermique et la production directe d'énergie thermique, et le déstockage seul d'énergie thermique.

La boucle de régulation 18 permet d'adapter la quantité d'énergie thermique fournie par le système de production d'eau chaude 2 à la machine thermodynamique 6 de production d'électricité.

De par la chaleur apportée par le système de production d'eau chaude 2, le fluide de service 40 passe de l'état liquide à l'état gazeux dans la chaudière 42. Le fluide de service 40 arrive ainsi à l'état gazeux à l'entrée de la turbine 43. Le fluide de service à l'état gazeux se détend alors dans la turbine 43 et fournit de l'énergie mécanique, en entraînant le rotor de la turbine en rotation. Cette énergie mécanique est transmise à la génératrice 44, afin de produire de l'électricité. En sortie de la turbine 43, le fluide de service 40 est toujours à l'état gazeux, et sous une pression nettement inférieure.

Le fluide de service 40 repasse alors à l'état liquide dans le condenseur 45 au contact de la source froide 4. En sortie du condenseur 45, le fluide de service 40 à l'état liquide est alors entraîné par la pompe 46 pour retourner à l'entrée de la chaudière 42 et exploiter de nouveau la chaleur fournie par le système de production d'eau chaude 2.

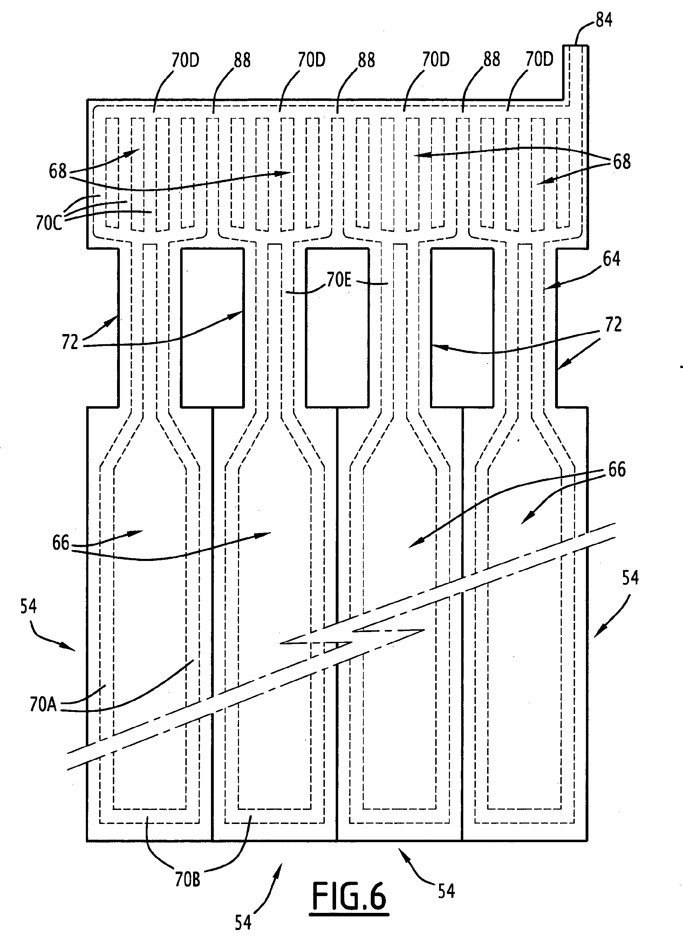

La figure 6 illustre un deuxième mode de réalisation, pour lequel les éléments analogues au mode de réalisation décrit précédemment sont repérés par des références identiques.

Selon ce deuxième mode de réalisation, les réservoirs 64 des caloducs sont reliés hydrauliquement entre eux de manière à former un unique réservoir 64 s'étendant sur la pluralité de caloducs 54. L'ensemble de caloducs comprend des troisièmes conduits de liaison 88. Chaque troisième conduit de liaison 88 relie deux réservoirs 64 adjacents. Plus précisément, chaque troisième conduit de liaison 88 est connecté entre deux deuxièmes conduits de liaison 70D adjacents et alignés.

Le procédé de fabrication de ce deuxième mode de réalisation est identique à celui du premier mode de réalisation, et n'est donc pas décrit à nouveau.

Le fonctionnement de ce deuxième mode de réalisation est identique à celui du premier mode de réalisation, et n'est donc pas décrit à nouveau.

L'homme du métier comprendra que, selon ce deuxième mode de réalisation, l'ensemble de caloducs ne comporte pas les conduits temporaires de remplissage du premier mode de réalisation, puisqu'il comprend les conduits permanents de liaison 88. L'homme du métier comprendra également que le procédé de fabrication ne comporte pas, après le remplissage des réservoirs, une étape de découpe, ou encore une étape de clinchage, ou encore une étape d'écrasement des conduits de liaison 88, puisque les réservoirs 64 des caloducs sont reliés hydrauliquement entre eux et ne sont pas fermés individuellement.

Ainsi, l'ensemble de caloducs selon l'invention permet de réduire les coûts de fabrication, puisque quatre caloducs 54 sont réalisés simultanément, avec un remplissage commun des réservoirs 64. La réalisation de l'ensemble de capteurs solaires 26 en est facilitée, puisque les quatre caloducs sont agencés simultanément autour du conduit de transport 48.

Les parties froides 68 des quatre caloducs forment une partie froide commune, d'aire supérieure ou égale à la somme des aires de quatre caloducs classiques indépendants les uns des autres, ce qui améliore les échanges thermiques entre les capteurs solaires 26 et le premier circuit de transport 14.

Les parties froides 68 des quatre caloducs sont reliées mécaniquement entre elles, solidairement les unes des autres, ce qui améliore la rigidité mécanique des quatre capteurs solaires 26 autour du conduit de transport 48, et réduit les risques de gauchissement des capteurs solaires 26 par rapport au conduit de transport 48.

On conçoit ainsi que l'invention permet de réduire le coût de fabrication de l'ensemble de caloducs et le coût de pose des capteurs.

## Revendications

1. Ensemble de caloducs pour capteurs solaires, du type comprenant une pluralité de caloducs (54), chaque caloduc (54) étant propre à être agencé dans un capteur solaire (26) respectif, et comprenant un fluide de caloduc (58), une première feuille (60) et une deuxième feuille (62) localement fusionnées entre elles et délimitant un réservoir (64), le réservoir (64) contenant le fluide de caloduc (58), s'étendant sur une partie chaude (66) d'évaporation du fluide de caloduc (58) et une partie froide (68) de condensation du fluide de caloduc (58), et étant formé par un interstice (69) entre les deux feuilles (60, 62), les réservoirs (64) d'au moins deux caloducs (54) étant délimités par une même première feuille (60) et une même deuxième feuille (62),
**caractérisé en ce que** les parties froides (68) desdits au moins deux caloducs (54) sont partiellement fusionnées entre elles deux à deux, et **en ce que** les parties chaudes (66) desdits au moins deux caloducs (54) sont disjointes.

2. Ensemble selon la revendication 1, **caractérisé en ce que** les réservoirs (64) des caloducs (54) sont reliés hydrauliquement entre eux de manière à former un unique réservoir s'étendant sur la pluralité de caloducs (54).

3. Ensemble selon la revendication 1 ou 2, **caractérisé en ce que** les feuilles (60, 62) sont métalliques, de préférence en aluminium.

4. Ensemble de capteurs solaires, du type comprenant une pluralité de capteurs solaires (26), chaque capteur (26) comprenant :
- un tube extérieur (73) de section circulaire, ayant deux extrémités (73A, 73B) et étant fermé en une première (73A) de ses extrémités,
- une couche (52) d'absorption du rayonnement solaire disposée à l'intérieur du tube extérieur (73),
- un caloduc (54) respectif d'un ensemble de caloducs,
chaque tube extérieur (73) étant fermé de manière hermétique autour du caloduc (54) respectif en la seconde (73B) de ses extrémités (73A, 73B), le vide (76) étant formé à l'intérieur dudit tube extérieur (73),
**caractérisé en ce que** l'ensemble de caloducs est conforme à l'une quelconque des revendications précédentes.

5. Ensemble de capteurs solaires selon la revendication 4, **caractérisé en ce que** chaque capteur solaire (26) comprend en outre un tube intérieur (74) de section circulaire, disposé à l'intérieur du tube extérieur (73), chaque tube (73, 74) ayant deux extrémités (73A, 73B, 74A, 74B) et étant fermé en une première (73A, 74A) de ses extrémités, et les tubes (73, 74) étant scellés l'un à l'autre, en la seconde (73B, 74B) de leurs extrémités, les tubes (73, 74) étant séparés par du vide (76).

6. Ensemble de capteurs solaires selon la revendication 5, **caractérisé en ce que** le tube intérieur (74) de chaque capteur comporte une surface extérieure (80) orientée vers le tube extérieur (73) dudit capteur (26), et une surface intérieure (82), **en ce que** la couche d'absorption (52) dudit capteur (26) est disposée contre ladite surface extérieure (80), et **en ce que**, pour la partie chaude (66) du caloduc (54) dudit capteur (26), le réservoir (64) est appliqué au moins localement contre ladite surface intérieure (82).

7. Ensemble de capteurs solaires selon l'une quelconque des revendications 4 à 6, **caractérisé en ce que** la partie chaude (66) de chaque caloduc (54) est en forme d'un demi-cylindre.

8. Ensemble de capteurs solaires selon l'une quelconque des revendications 4 à 7, **caractérisé en ce que** la partie froide (68) de chaque caloduc (54) est propre à être disposée au contact d'un conduit (48) cylindrique, et **en ce que** ladite partie froide (68) est en forme d'un demi-cylindre.

9. Ensemble de capteurs solaires selon les revendications 7 et 8 prises ensemble, **caractérisé en ce que** l'axe (I) du demi-cylindre de la partie chaude (66) de chaque caloduc (54) est distinct de l'axe (X) du demi-cylindre de la partie froide (68) du caloduc (54) correspondant, et **en ce que** le caloduc (54) comporte un rétrécissement (72) de son étendue circonférentielle et/ou longitudinale par rapport à son étendue dans la partie courante des parties chaude (66) et froide (68), entre la partie chaude (66) et la partie froide (68) formant une charnière de liaison.

10. Ensemble de capteurs solaires selon l'une quelconque des revendications 4 à 9, **caractérisé en ce que** les capteurs (26) sont sensiblement parallèles les uns des autres, et **en ce que** l'ensemble comporte au moins une barre (78) de liaison des capteurs solaires (26) entre eux, ladite barre (78) étant disposée sensiblement perpendiculairement aux capteurs (26) et au contact de chaque tube extérieur (73) du côté de sa première extrémité (73A).

11. Système (2) de production d'eau chaude à partir d'énergie solaire comprenant :
- un ensemble de capteurs solaires (26) propres à chauffer un fluide caloporteur (10) à partir d'énergie solaire, et
- un circuit (14) de transport du fluide caloporteur (10) entre les capteurs solaires (26) et un distributeur d'eau chaude,
**caractérisé en ce que** l'ensemble de capteurs solaires est conforme à l'une quelconque des revendications 4 à 10.

12. Installation de génération d'énergie électrique à partir d'énergie solaire comprenant :
- un système de production d'eau chaude (2),
- une source froide (4), et
- une machine thermodynamique (6) de production d'électricité, utilisant l'eau chaude produite par ledit système (2) et la source froide (4),
**caractérisée en ce que** le système de production d'eau chaude (2) est conforme à la revendication 11.

13. Procédé de fabrication d'un ensemble de caloducs pour capteurs solaires (26), comprenant une pluralité de caloducs (54), le procédé comportant :
- l'assemblage d'une première feuille (60) et d'une deuxième feuille (62) délimitant entre elles les réservoirs (64) d'au moins deux caloducs (54), en maintenant une portion (71) de liaison entre deux caloducs (54) adjacents parmi lesdits au moins deux caloducs (54),
- la découpe de l'ensemble de caloducs selon le contour extérieur de chacune des parties chaudes (66), de sorte que les parties chaudes (66) des caloducs sont disjointes, et
- le remplissage des réservoirs (64) avec un fluide de caloduc (58).

14. Procédé selon la revendication 13, **caractérisé en ce que** le remplissage des réservoirs est effectué à partir d'une seule extrémité de remplissage (84).

15. Procédé selon la revendication 13 ou 14, l'ensemble de caloducs comportant au moins un conduit temporaire de remplissage (86), chaque conduit temporaire de remplissage (86) étant agencé entre deux réservoirs (64) sucessifs au niveau des parties froides (68),
**caractérisé en ce qu'**il comporte, après le remplissage des réservoirs (64), la découpe des conduits temporaires de remplissage (86) et le soudage hermétique des caloducs (54) aux endroits découpés, de sorte que les réservoirs (64) sont fermés individuellement.

## Patentansprüche

1. Satz von Wärmerohren für Sonnenkollektoren, des Typs, der eine Mehrzahl von Wärmerohren (54) aufweist, wobei jedes Wärmerohr (54) geeignet ist, um in einem jeweiligen Sonnenkollektor (26) angeordnet zu sein, und aufweist: ein Wärmerohrfluid (58), eine erste dünne Platte (60) und eine zweite dünne Platte (62), die lokal miteinander fusioniert sind und einen Behälter (64) begrenzen, wobei der Behälter (64) das Wärmerohrfluid (58) enthält, sich über einen warmen Abschnitt (66) zum Verdampfen des Wärmerohrfluids (58) und einen kalten Abschnitt (68) zum Kondensieren des Wärmerohrfluids (58) erstreckt und durch einen Zwischenraum (69) zwischen den beiden dünnen Platten (60, 62) ausgebildet ist, wobei die Behälter (64) von mindestens zwei Wärmeleitungen (54) durch eine selbe erste dünne Platte (60) und eine selbe zweite dünne Platte (62) begrenzt sind,
**dadurch gekennzeichnet, dass** die kalten Abschnitte (68) der mindestens zwei Wärmeleitungen (54) teilweise paarweise miteinander fusioniert sind, und dass die warmen Abschnitte (66) der mindestens zwei Wärmeleitungen (54) getrennt sind.

2. Satz gemäß Anspruch 1, **dadurch gekennzeichnet, dass** die Behälter (64) der Wärmerohre (54) hydraulisch miteinander verbunden sind, um einen einzigen Behälter auszubilden, der sich über die Mehrzahl von Wärmerohren (54) erstreckt.

3. Satz gemäß Anspruch 1 oder 2, **dadurch gekennzeichnet, dass** die dünnen Platten (60, 62) aus Metall, vorzugsweise aus Aluminium sind.

4. Satz von Sonnenkollektoren des Typs, der eine Mehrzahl von Sonnenkollektoren (26) aufweist, wobei jeder Kollektor (26) aufweist:
- ein äußeres Rohr (73) mit kreisförmigem Querschnitt, das zwei Enden (73A, 73B) hat und an einem ersten (73A) seiner Enden geschlossen ist,
- eine Sonnenstrahlungsabsorptionsschicht (52), die im Inneren des äußeren Rohres (73) angeordnet ist,
- ein jeweiliges Wärmerohr (54) eines Satzes von Wärmerohren,
wobei jedes äußere Rohr (73) an dem zweiten (73B) seiner Enden (73A, 73B) hermetisch um das jeweilige Wärmerohr (54) geschlossen ist, wobei das Vakuum (76) im Inneren des äußeren Rohres (73) ausgebildet ist,
**dadurch gekennzeichnet, dass** der Satz von Wärmerohren irgendeinem der vorhergehenden Ansprüche entspricht.

5. Satz von Sonnenkollektoren gemäß Anspruch 4, **dadurch gekennzeichnet, dass** jeder Sonnenkollektor (26) ferner ein inneres Rohr (74) mit kreisförmigem Querschnitt aufweist, das im Inneren des äußeren Rohres (73) angeordnet ist, wobei jedes Rohr (73, 74) zwei Enden (73A, 73B, 74A, 74B) aufweist und an einem ersten (73A, 74A) seiner Enden geschlossen ist, und wobei die Rohre (73, 74) an dem zweiten (73B, 74B) ihrer Enden miteinander versiegelt sind, wobei die Rohre (73, 74) durch Vakuum (76) voneinander getrennt sind.

6. Satz von Sonnenkollektoren gemäß Anspruch 5, **dadurch gekennzeichnet, dass** das innere Rohr (74) jedes Kollektors aufweist: eine Außenfläche (80), die zu dem äußeren Rohr (73) des Kollektors (26) hin ausgerichtet ist, und eine Innenfläche (82), und dass die Absorptionsschicht (52) des Kollektors (26) gegen die Außenfläche (80) angeordnet ist, und dass der Behälter (64) für den warmen Abschnitt (66) des Wärmerohres (54) des Kollektors (26) zumindest lokal an der Innenfläche (82) anliegt.

7. Satz von Sonnenkollektoren gemäß irgendeinem der Ansprüche 4 bis 6, **dadurch gekennzeichnet, dass** der warme Abschnitt (66) jedes Wärmerohres (54) die Form eines Halbzylinders hat.

8. Satz von Sonnenkollektoren gemäß irgendeinem der Ansprüche 4 bis 7, **dadurch gekennzeichnet, dass** der kalte Abschnitt (68) jedes Kollektors (54) geeignet ist, um in Kontakt mit einer zylinderförmigen Leitung (48) angeordnet zu sein, und dass der kalte Abschnitt (68) die Form eines Halbzylinders hat.

9. Satz von Sonnenkollektoren gemäß Anspruch 7 und 8 zusammen, **dadurch gekennzeichnet, dass** sich die Achse (I) des Halbzylinders des warmen Abschnitts (66) jedes Wärmerohres (54) von der Achse (X) des Halbzylinders des kalten Abschnitts (68) des korrespondierenden Wärmerohres (54) unterscheidet, und dass das Wärmerohr (54) bezüglich seiner Ausdehnung im Strömungsabschnitt des warmen (66) und des kalten (68) Abschnitts eine Verjüngung (72) seiner Umfangs- und/oder Längsausdehnung zwischen dem warmen Abschnitt (66) und dem kalten Abschnitt (68) aufweist, die ein Verbindungsgelenk ausbildet.

10. Satz von Sonnenkollektoren gemäß irgendeinem der Ansprüche 4 bis 9, **dadurch gekennzeichnet, dass** die Kollektoren (26) im Wesentlichen parallel zueinander sind, und dass der Satz mindestens eine Stange (78) zum Verbinden der Sonnenkollektoren (26) miteinander aufweist, wobei die Stange (78) im Wesentlichen senkrecht zu den Kollektoren (26) und in Kontakt mit jedem äußeren Rohr (73) auf der Seite seines äußeren Endes (73A) angeordnet ist.

11. System (2) zum Erzeugen von Warmwasser aus Sonnenenergie, aufweisend:
- einen Satz Sonnenkollektoren (26), die geeignet sind, um ein Wärmeübertragungsfluid (10) aus Sonnenenergie zu erwärmen, und
- einen Kreis (14) zum Transportieren des Wärmeübertragungsfluids (10) zwischen den Sonnenkollektoren (26) und einem Warmwasserverteiler,
**dadurch gekennzeichnet, dass** der Satz Sonnenkollektoren irgendeinem der Ansprüche 4 bis 10 entspricht.

12. Einrichtung zum Erzeugen von elektrischer Energie aus Sonnenenergie, aufweisend:
- ein System zum Erzeugen von Warmwasser (2),
- eine Kältequelle (4) und
- eine Wärmekraftmaschine (6) zum Erzeugen von Elektrizität mittels des durch das System (2) erzeugten Warmwassers und der Kältequelle (4), **dadurch gekennzeichnet, dass** das System zum Erzeugen von Warmwasser (2) dem Anspruch 11 entspricht.

13. Verfahren zum Herstellen eines Satzes von Wärmerohren für Sonnenkollektoren (26), der eine Mehrzahl von Wärmerohren (54) aufweist, wobei das Verfahren aufweist:
- das Montieren einer ersten dünnen Platte (60) und einer zweiten dünnen Platte (62), die zwischen einander die Behälter (64) von mindestens zwei Wärmerohren (54) begrenzen, wobei zwischen zwei benachbarten Wärmerohren (54) von den mindestens zwei Wärmerohren (54) ein Verbindungsabschnitt (71) aufrechterhalten wird,
- das Abtrennen des Satzes von Wärmerohren entlang dem Außenumriss von jedem der warmen Abschnitte (66), so dass die warmen Abschnitte (66) der Wärmerohre voneinander getrennt werden, und
- das Füllen der Behälter (64) mit einem Wärmerohrfluid (58).

14. Verfahren gemäß Anspruch 13, **dadurch gekennzeichnet, dass** das Füllen der Behälter von einem einzigen Füllende (84) aus erfolgt.

15. Verfahren gemäß Anspruch 13 oder 14, wobei der Satz von Wärmerohren mindestens eine temporäre Füllleitung (86) aufweist, wobei jede temporäre Füllleitung (86) zwischen zwei aufeinanderfolgenden Behältern (64) auf der Höhe der kalten Abschnitte (68) angeordnet ist,
**dadurch gekennzeichnet, dass** es nach dem Füllen der Behälter (64) das Abtrennen der temporären Füllleitungen (86) und das hermetische Verschweißen der Wärmerohre (54) an den abgetrennten Stellen aufweist, so dass die Behälter (64) einzeln verschlossen werden.

## Claims

1. A set of heat pipes for solar collectors, of the type comprising a plurality of heat pipes (54), each heat pipe (54) being suitable for being laid out in a respective solar collector (26), and comprising a heat pipe fluid (58), a first sheet (60) and a second sheet (62) merged locally with each other and delimiting a reservoir (64), the reservoir (64) containing the heat pipe fluid (58), extending over a hot part (66) for evaporating the heat pipe fluid (58) and a cold part (68) for condensing the heat pipe fluid (58), and being formed by an interstice (69) between the two sheets (60, 62), the reservoirs (64) of at least two heat pipes (54) being delimited by a same first sheet (60) and a same second sheet (62),
**characterized in that** the cold parts (68) of said at least two heat pipes (54) are partly merged with each other in pairs, and **in that** the hot parts (66) of said at least two heat pipes (54) are separate.

2. The set according to claim 1, **characterized in that** the reservoirs (64) of the heat pipes (54) are hydraulically interlinked to form a single reservoir extending over the plurality of the heat pipes (54).

3. The set according to claim 1 or 2, **characterized in that** the sheets (60, 62) are metal sheets, preferably made of aluminium.

4. A set of solar collectors, of the type comprising a plurality of solar collectors (26), each collector (26) comprising:
- an outer tube (73) of circular cross-section, having two ends (73A, 73B) and being closed at a first (73A) of its ends,
- a solar radiation absorption layer (52) arranged inside the outer tube (73),
- a respective heat pipe (54) of a set of heat pipes,
each outer tube (73) being hermetically closed around the respective heat pipe (54) at the second (73B) of its ends (73A, 73B), a vacuum (76) being formed inside said outer tube (73),
**characterized in that** the set of heat pipes is in accordance with any one of the preceding claims.

5. The set of solar collectors according to claim 4, **characterized in that** each solar collector (26) additionally comprises an inner tube (74) of circular cross-section, arranged inside the outer tube (73), each tube (73, 74) having two ends (73A, 73B, 74A, 74B) and being closed at a first (73A, 74A) of its ends, and the tubes (73, 74) being sealed one to the other at the second (73B, 74B) of their ends, the tubes (73, 74) being separated by the vacuum (76).

6. The set of solar collectors according to claim 5, **characterized in that** the inner tube (74) of each collector includes an outer surface (80) oriented towards the outer tube (73) of said collector (26), and an inner surface (82), **in that** the absorption layer (52) of said collector (26) is arranged against said outer surface (80), and **in that**, for the hot part (66) of the heat pipe (54) of said collector (26), the reservoir (64) is applied at least locally against said inner surface (82).

7. The set of solar collectors according to any one of claims 4 to 6, **characterized in that** the hot part (66) of each heat pipe (54) is in the shape of a half-cylinder.

8. The set of solar collectors according to any one of claims 4 to 7, **characterized in that** the cold part (68) of each heat pipe (54) is suitable for being arranged in contact with a cylindrical pipe (48), and **in that** said cold part (68) is in the shape of a half-cylinder.

9. The set of solar collectors according to claims 7 and 8 taken together, **characterized in that** the axis (I) of the half-cylinder of the hot part (66) of each heat pipe (54) is different from the axis (X) of the half-cylinder of the cold part (68) of the corresponding heat pipe (54), and **in that** the heat pipe (54) includes a narrowing (72) of its circumferential and/or longitudinal extent with respect to its extent in the regular part of the hot (66) and cold (68) parts, between the hot part (66) and the cold part (68) forming a connecting joint.

10. The set of solar collectors according to any one of claims 4 to 9, **characterized in that** the collectors (26) are substantially parallel with one another, and **in that** the set includes at least one connecting bar (78) interconnecting the solar collectors (26), said bar (78) being arranged substantially perpendicularly to the collectors (26) and in contact with each outer tube (73) near its first end (73A).

11. A system (2) for producing hot water from solar energy comprising:
- a set of solar collectors (26) suitable for heating a heat transfer fluid (10) from solar energy, and
- a circuit (14) for transporting the heat transfer fluid (10) between the solar collectors (26) and a hot water distributor,
**characterized in that** the set of solar collectors is in accordance with any one of claims 4 to 10.

12. A plant for generating electrical energy from solar energy comprising:
- a hot water production system (2),
- a heat sink (4), and
- an electricity-producing thermodynamic machine (6), using the hot water produced by said system (2) and the heat sink (4),
**characterized in that** the hot water production system (2) is in accordance with claim 11.

13. A method for manufacturing a set of heat pipes for solar collectors (26), comprising a plurality of heat pipes (54), the method including the steps of:
- assembling a first sheet (60) and a second sheet (62) delimiting between them the reservoirs (64) of at least two heat pipes (54), while maintaining a connecting portion (71) between two adjacent heat pipes (54) among said at least two heat pipes (54),
- cutting the set of heat pipes according to the external outline of each of the hot parts (66), such that the hot parts (66) of the heat pipes are separate, and
- filling the reservoirs (64) with a heat pipe fluid (58).

14. The method according to claim 13, **characterized in that** the reservoirs are filled from only one filling end (84).

15. The method according to claim 13 or 14, the set of heat pipes including at least one temporary filling pipe (86), each temporary filling pipe (86) being laid out between two successive reservoirs (64) at the cold parts (68),
**characterized in that** the method includes, after the reservoirs (64) are filled, the step of cutting the temporary filling pipes (86) and hermetically welding the heat pipes (54) at the cut locations, such that the reservoirs (64) are closed individually.
